(19) Europäisches Patentamt
European Patent Office
Office européen des brevets

(11) **EP 2 930 291 A1**

(12) **EUROPEAN PATENT APPLICATION**
published in accordance with Art. 153(4) EPC

(43) Date of publication:
**14.10.2015 Bulletin 2015/42**

(51) Int Cl.:
**E05B 47/00** (2006.01)

(21) Application number: **13863581.8**

(22) Date of filing: **03.12.2013**

(86) International application number:
**PCT/RU2013/001086**

(87) International publication number:
**WO 2014/092606 (19.06.2014 Gazette 2014/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.12.2012 RU 2012152879**

(71) Applicant: **Obzhirov, Evgeniy Anatolevich**
**Moscow 119331 (RU)**

(72) Inventor: **Obzhirov, Evgeniy Anatolevich**
**Moscow 119331 (RU)**

(74) Representative: **Lapienis, Juozas**
**MSP Europe UAB**
**21-92 Seimyniskiu Str.**
**09236 Vilnius (LT)**

(54) **ELECTROSTATIC LOCK**

(57)    The present invention concerns an electrostatic lock and relates to devices for fixing and holding in a fixed state relative to one another individual parts or elements of various mechanisms and devices with the possibility of the subsequent disengagement thereof, and functions by means of the electrostatic (Coulomb) force of attraction between electrodes charged with opposite electrical charges and separated by a sufficiently thin layer of dielectric material. The technical result of the present invention is the guaranteed fixing of the elements of the electrostatic lock upon closing. The primary technical solution of the present invention is the inclusion of electric valves (rectifiers) in the power supply circuit of the electrostatic lock, said valves stabilizing the process of electric charge accumulation on the electrodes of the electrostatic lock and guaranteeing the closing thereof.

**Fig. 2**

**Description**

Technical field

Electrostatic lock (ESL) relates to devices for releasable fixing and holding individual parts or elements of various mechanisms and devices in a fixed state relative to each other, and operates by electrostatic (Coulomb) attraction force between the electrodes, charged with opposite electric charges and separated by a thin layer of dielectric. This device can serve as a locking device (lock), and also can be used for many other similar technical purposes.

Background

There are known such locking devices being active magnetic locks, based on the magnetic interaction between the electromagnet and the armature of a high magnetic permeability metal, between which an attraction force holding the lock closed appears as the electric current flows through the electromagnet. The main drawback of such a device is the necessity of a permanent power source: with no electrical power supply the lock turns unlocked, while the constant output of such devices usually does not exceed 5-10 W. For proper operation an ESL requires several times less electric energy, thus allowing for its operation within autonomous solutions, when it is difficult or impossible to provide power cabling; and hence enables to use renewable energy sources only, e.g. solar batteries; thermocouple units; low-power electrical generators, converting the mechanical motion energy of the parts and elements being fixed into the electrical one upon the ESL fixing (locking).

Despite some advantages over the magnetic locks currently the use of electrostatic force for fixing and holding the individual elements is of limited application, generally in the fields where a relatively small force is enough to achieve the desired effect. Electrostatic chucks mainly used to capture and hold silicon wafers have become widespread in the production of chips and other semiconductor devices. Also, so-called electrostatic holders for paper are commonly used as a rule in printing devices. All these technical solutions have got common design elements: electrodes having one or more dielectric layers located therebetween so that if the electrodes are supplied with opposite electric charges by a power supply, they will be attracted to each other and attract the held object whereon under the influence of the electrodes electric field a polarization charge occurs attracted to the electrodes. There are known attempts to develop locking devices (locks), using electrostatic attraction forces for capturing and holding fixed (locked) corresponding locking devises (e.g., RF patent: RU 2158438 C1). Within these devices, electrodes and dielectrics are used similarly for accumulating opposite polarity electric charges for the electrostatic capture and mutual fixation of the electrodes cinematically connected with the locking mechanism. However, all these solutions have got a common and fundamental drawback: the electrodes being simply connected to the electrical power supply that is used or implied within such technical solutions, not only provides no required technical effect consisting in creation of stable charges and attraction forces therebetween for holding the electrodes fixed relative to each other, yet in many cases leads to fundamental inability to obtain such an effect. It is a guaranteed buildup of stable electrical charges providing a resistant to external and internal influences electrostatic attraction force between the ESL electrodes being fixed, that is a major technical effect of the present invention incorporating corresponding circuitry and other technical elements.

Detailed description

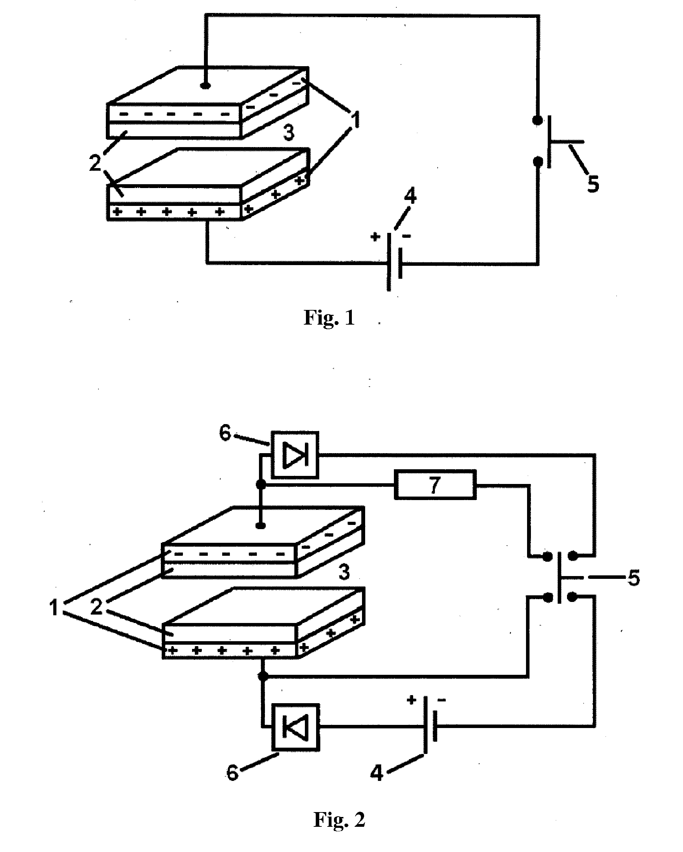

According to Fig. 1, it is illustrated a device comprising of two equal flat conductive electrodes 1 (plates with an area $S$), separated with to equal dielectric 2 layers (with a specific dielectric constant $\varepsilon_d$ and total thickness $d$) applied onto the electrodes. The plates can move relative to each other in a direction perpendicular to the plane of the plates, wherein a gap 3 thus formed between the dielectric layers is filled with air having a specific dielectric constant approximately equal to 1. In this form, the device is a capacitor of variable capacitance, the value of which depends on the air gap x between the electrodes:

$$C(x) = \frac{\varepsilon_0 S}{d/\varepsilon_d + x} \quad . \tag{1}$$

Wherein $\varepsilon_0$ is permittivity of vacuum, equal to 8.85·10$^{-12}$ F/m. For x = 0, the capacitor capacitance makes: $C(0)$ = $\varepsilon_0 \varepsilon_d S/d$. If electrodes charged with opposite electric charges $Q$ of equal value, a potential difference $U = Q/C(x)$ and an electrostatic (Coulomb) attraction force appear between the electrodes.

To determine this force magnitude a well-known principle of virtual work is used: the attraction force is equal to the ratio of an infinitesimal increment $\Delta W$ of the capacitor energy to the infinitesimal increment $\Delta x$, i.e. the derivative of the energy according to x coordinate (this is a simple consequence of the energy conservation law: the work of the external force is fully used for the capacitor electrostatic energy change). The capacitor energy for the constant charge makes:

$$W(x) = \frac{Q^2}{2C(x)} = \frac{Q^2}{2\varepsilon_0 S}\left(\frac{d}{\varepsilon_d} + x\right).$$ (2)

Then, through substituting (1) in (2) and differentiating, one may obtain:

$$F_{Q=Const} = \frac{dW}{dx} = \frac{Q^2}{2}\frac{d}{dx}\left(\frac{1}{C(x)}\right) = \frac{Q^2}{2}\frac{1}{\varepsilon_0 S} = \frac{Q^2}{2C(0)}\frac{\varepsilon_d}{d} = W(0)\frac{\varepsilon_d}{d}$$ (3)

Wherein $W(0)$ is the capacitor energy for the position where x = 0. It should be noted that the capacitor energy increases linearly with increasing $x$ and the resulting attraction force does not depend on the air gap x, being constant determined by the device capacitance parameters and the size charges accumulated (or $W(0)$ - being initial electrical energy, imparted to the device).

The equation for the attraction force (3) can be obtained directly as a product of the charge at one of the plates Q and the resulting electric field intensity E, which influences the charge and equals to the sum of the electric field intensity produced by a charge at the other electrode, and the intensity produced by the electric polarization vector of the dielectric.

The ratio of the attraction force to the charge energy $F/W$ in (2) and (3) equals to the ratio $\varepsilon_d/d$ that can reach enormous values. For example, if the specific dielectric constant $\varepsilon_d = 100$ (ordinary capacitor ceramics), and the dielectric thickness d = 10 $\mu$m ($10^{-5}$ m), to create a holding force equivalent to 1 ton ($10^4$ N) it is enough to impart to the capacitor the energy of $10^{-3}$ J. However, if it is just included into an electrical circuit the power supply (e.g., battery), the device wouldn't work consistently. The reason is that the attraction force between the ESL electrodes essentially depends on the stability of the charges at the electrodes: any possibility of a charge outflow from the electrodes, or the charge value variations caused by the transients that occur when charging electrodes, dramatically reduces the attraction force in the event of even very small (in comparison with the dielectric layer width) air gap between the electrodes.

To see this, consider the work of the above devices of Fig. 1, chargeable with a battery 4 having a constant EMF equal to $U_0$: for transferring the device from the open position (electrodes discharged and free to move relative to each other) to the closed position (x = 0) it is connected to the battery 4 via a switch 5. For a theoretic electric circuit we obtain a stable charge at the capacitor $Q_{x=0} = C(0)U_0$ for the initial time and an attraction force $F_{x=0} = W(0)\dfrac{\varepsilon_d}{d}$, corresponding to the force of (3). Yet these expressions are valid only for the position x = 0. The potential difference across the capacitor is now always constant and equal to $U_0$, if we start to increase the air gap x, the capacitor capacitance according to the Equation (1) will begin to decrease, and the capacitor charge equal to the product of voltage and capacitance will also start to decrease (along will the battery discharge):

$$Q(x) = C(x)U_0.$$ (4)

The capacitor energy $W(x) = \dfrac{C(x)U_0^{\,2}}{2}$ will decrease as well. To obtain the attraction force between the capacitor plates one should substitute (4) into (3):

$$F_{U=Const} = \frac{Q(x)^2}{2}\frac{1}{\varepsilon_0 S} = \frac{U_0^{\,2}}{2}\frac{C(x)^2}{\varepsilon_0 S} = \frac{U_0^{\,2}}{2}\frac{\varepsilon_0 S}{\left(\frac{d}{\varepsilon_d} + x\right)^2}$$ (5)

As it is seen from the Equation (5), the attraction force decreases dramatically when even very small air gaps occur. So, in the above example $\varepsilon_d$ = 100 and $d$ = 10 $\mu$m ($10^{-5}$ m), in the event of an air gap with a width of $x = d/10 =$ 1 $\mu$m ($10^{-6}$ m) the attraction force becomes 121 times less, and for $x = d$ = 10 $\mu$m ($10^{-5}$ m) becomes more than 10000 less and equals to 1 N.

In this case, the instant the device is locking (x = 0) after supplying a voltage from the battery to the circuit electrodes a transition process begins - there are gradually attenuating oscillations caused by the presence of an inherent capacitance, inductance and resistance values within the actual circuit and battery, except the capacitance of the fixed electrodes, which, altogether will determine the oscillation frequency $\omega$ and the attenuation rate $\beta$, wherein the initial amplitude will depend on the initial conditions (the value of $U_0$):

$$Q = C(0)U = C(0)U_0\left(1 - e^{-\beta t}\cos\omega t\right). \qquad (6)$$

In a first approximation the actual electric circuit can be represented by an equivalent circuit comprising series-connected inductance $L_k$, capacitance $C_k$ and resistance $R_k$, i. e. in the form of a simple oscillator circuit wherein for $\omega$

and β it is valid: $\beta = -\dfrac{R_k}{2L_k}, \omega = \sqrt{\dfrac{1}{L_k C_k} - \left(\dfrac{R_k}{2L_k}\right)^2}$ .

The Equation (6) shows that when the power is on at the beginning of the transition process, even when the attenuation can be neglected, the magnitude of the charge at the electrodes will range from 0 to $2Q_0 = 2C(0)U_0$, and it will occur at times when the electrostatic attraction force is proportional to the square of the charge and equals to zero. Any impact on the electrodes at this point will result in air gaps, the attraction force rapid decrease according to the Equation (5), and will make further fixation of the ESL electrodes to each other impossible without application of additional external force, i. e. the device won't be able to perform its function.

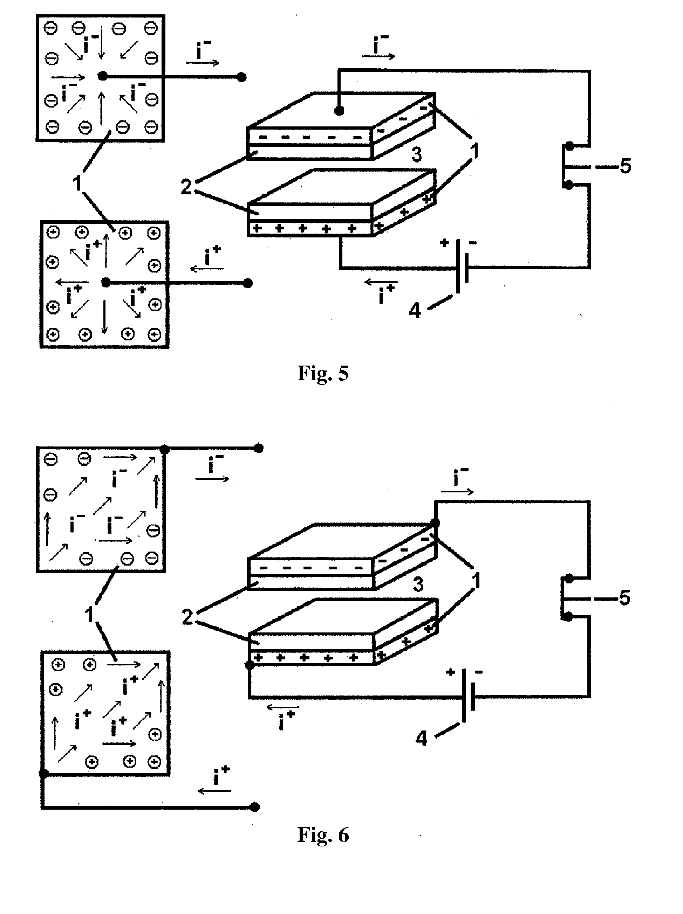

The factors creating the repulsive force between the electrodes, when the charges at the electrodes reduced to zero, are as follows: an elastic force opposing the electrostatic attraction force, deforming the electrodes and dielectric, which in this case are similar to a compressed spring; a magnetic Ampere force arising between symmetrically arranged electrodes, at the same time providing opposite currents of the same magnitude passing therethrough. Fig. 5 shows such repelling currents, equal to the rates (6) of the charges. These currents will fluctuate out of phase with the charge values and will take the maximum in absolute magnitude by the time when the charges at the electrodes equal to zero.

Based on the above, it can be concluded that the device of Fig. 1 can not perform its basic function - the fixation of electrodes. To achieve this technical effect and the efficient ESL operation it is necessary to exclude the currents, reverse to the ones of the electrodes being charged. It's enough to include electric valves (rectifiers) into the operating electrical ESL as devices having non-linear current-voltage characteristics: a minimal resistance in the forward direction and maximal possible otherwise.

Basic embodiments

For example, a rectifier diode can be such a device. According to Fig. 2 a pair of such valves (rectifiers) with a reference number 6 integrated in series with the electrodes and the power supply into the ESL circuit, eliminates the reverse current and trap the charges at the electrodes, providing a constant attraction force therebetween according to Equation (3), and also serve as a filter that neutralizes transient oscillations occurred when the power source is turned on. Thus, Fig. 2 shows a ESL guaranteeing the achievement of the desired technical effect, comprising two electrodes 1, a dielectric 2, applied to the electrodes, wherein the electrodes can be tightly adjoin each other with their sides covered with a dielectric providing no air gaps, and at least one of the electrodes may move relative to the other one forming a gap 3 therebetween; two electric valves (rectifiers) 6, each connected in series with its electrodes as close to the electrode so as to allow the electrodes to accumulate opposite electric charges and to exclude the possibility of reverse current; a switch (electric key) 5, closing the electrodes and the electric valves (rectifiers) into a single circuit with an electrical power supply 4 while the ESL is locked, and causing short-circuit of the electrodes (either through a branch resistance 7) in the other position when ESL is unlocked.

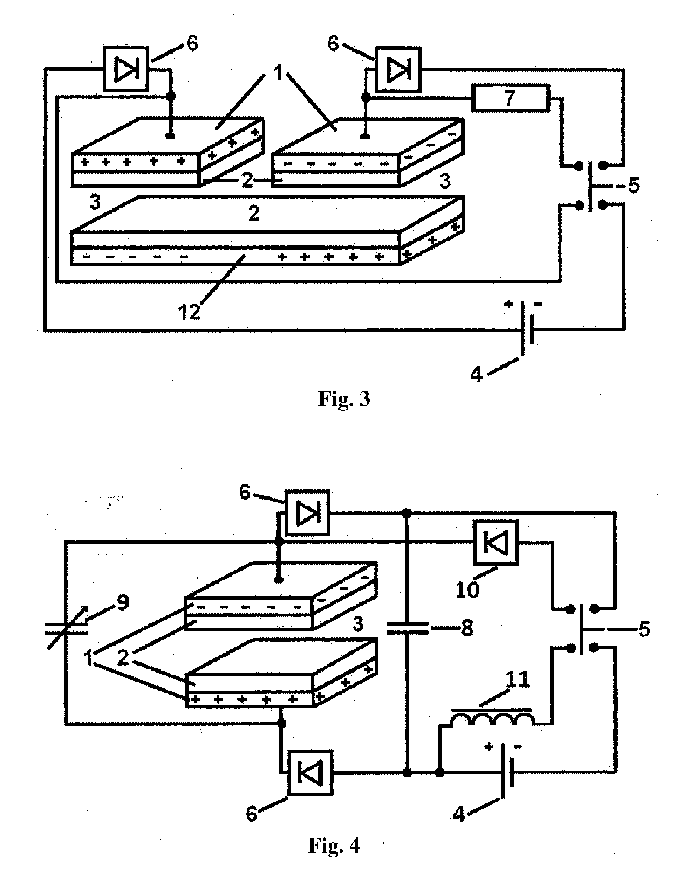

Fig. 3 shows an ESL, besides the electrodes 1 chargeable directly from the electrical power supply (primary electrodes) further comprising a secondary electrode 12, separated from the primary electrodes with dielectric 2 layers tightly adjoined thereto at a fixed (locked) state of the ESL, so when the electric charges are accumulated on the primary electrodes the secondary charges induced (stimulated) by the primary charges electric fields on the primary electrodes are accumulated on the secondary electrode on its contact surface with the primary ones (through the dielectric); wherein the induced secondary charges are of opposite polarity with respect to the primary charges inducing them thus creating an electrostatic attraction force between the primary and secondary electrodes. Operation of such ESL is completely similar to that shown in Fig. 2, and in many cases it is more convenient and easier.

Preferred embodiment

For ESL operation (Fig. 2 or Fig. 3) it is very important to include one of the electrodes into a turning pair (for example, by means of a ball coupling) thus enabling the electrode to make small turns for fine adjustment to the other electrode when locking ESL. Otherwise, the inevitable technical tolerances during the assembling of ESL elements will lead to fatal air gaps prohibit ESL from normal operation. For example, in the case of flat electrodes when one electrode's plane becomes non-parallel to another electrode's one $10^{-3}$ radians angle is enough for 1 cm long electrode in order to create an air gap up to 10 $\mu$m between the electrodes that merely eliminates ESL operation. Therefore, the best embodiment of the invention must contain at least one of the electrodes included into the turning pair as described above. In addition, according to the Equation (3) the attraction force between the electrodes, *ceteris paribus,* is the higher, the thinner is the dielectric layer between the *electrodes d* and the greater is its specific dielectric constant $\varepsilon_d$. Therefore, the best ESL embodiment according to be implemented should contain a dielectric suitable for a thin film to be produced thereof and having the greatest possible ratio $\varepsilon_d/d$ compared with other materials.

Further embodiments

For more secure operation of the ESL it is possible to introduce into the common circuit an additional capacitor placed in parallel with the ESL electrodes, wherein the electric valves (rectifiers) should be positioned between the electrodes and the additional capacitor. Fig. 4 illustrate this additional capacitor with the reference number 8.

Such introduction is of particular advantage when autonomous power sources are used: an impulse generator (e.g., piezo generator) or an unstable voltage source (e.g. solar-battery and thermocouple). As the ESL electrodes without recharging will be slowly discharged because of the inevitable leakage currents, at sufficiently high capacity of the additional capacitor the term of the ESL being in a locked state can be virtually unlimited. If similarly to the additional storage capacitor a capacitor of variable capacitance may be introduced into the circuit in parallel, it is possible, after ESL closure this will enable to regulate the locked ESL voltage at changing the capacitor capacitance, increasing it and thus increasing the attractive force between electrodes. If such a capacitor capacitance is rather small compared to the closed electrode capacitance, it can be introduced into the circuit in parallel with the electrodes to be fixed, eliminating any electric valves (rectifiers). Fig. 4 shows said capacitor with reference number 9. Through increasing such capacitor capacitance it's possible to reduce the ESL electrodes voltage and the attraction force between the electrodes. Such a capacitor capacitance upon ESL locking should not exceed certain threshold value, otherwise the operation of the device would be unstable due to the transients at the ESL locking. The ideal variant is when such a switched capacitor capacitance equals zero at the ESL fixing (locking), and at the ESL unlocking it becomes several orders greater than the capacitance C ($x$) of the electrodes being fixed. In this case said switched capacitor can be used for locking and unlocking the ESL: for locking with simultaneous connecting to the power supply the switched capacitor is turned into a position when the capacitance equals zero, while for unlocking with simultaneous disconnecting ESL from the power supply the capacitor is turned into a position when the capacitance is maximal.

For the ESL operation it is essential to provide it with an electrical circuit for unlocking, with an opposite polarity recharge foreseen for one of the electrodes, while the other being charged with the initial charge. As a result an electrostatic repulsive force appears between the electrodes thus accelerating the ESL unlocking, that may be of a particular importance in event of the ESL electrodes and/or dielectrics adhesion effect resulting from staying locked for a long period. Fig. 4 shows an electrical circuit of such an ESL, further comprising an inductance coil 11 and an electric valve (rectifier) 10, each enhancing the electrostatic repulsion effect.

To increase the ESL it is advisably to create two different groups of contacts for introducing the electrodes into the ESL electrical circuit: the groups of symmetrical contacts each situated on its electrode symmetrically to the contact on the oppositely charged facing electrode it is attracted to (similar to the contacts of Fig. 5), so that in event of the electrodes being discharged when unlocking the ESL an extra Ampere force is created repulsing the facing electrodes (a force of interaction between the facing electrodes when being discharged), enhancing and accelerating the ESL unlocking; and the group of antisymmetrical contacts each situated on its electrode antisymmetrically to the contact on the oppositely charged facing electrode it is attracted to (similar to the contacts of Fig. 6), so that in event of the electrodes being charged when locking the ESL an extra Ampere force is created attracting the facing electrodes (a force of interaction between the facing electrodes when being charged) enhancing and accelerating the ESL locking; wherein the ESL electrodes being not introduced into the circuit but through the antisymmetrical contacts (the symmetrical ones being disconnected), while in event of the ESL unlocking the electrodes are not introduced but through the symmetrical contacts (the antisymmetrical ones being disconnected). For enhancing the effect, sometimes, it is advisable to provide the ESL with a magnetic actuator for further adjusting and prefixing the lock by means of the electric magnet. After completing the ESL locking and upon creating a stable attraction force acting between the electrodes the electric magnet is turned off, and nothing but the electrostatic attraction forces action remains.

Brief description of the drawings

Fig. 1 shows a device comprising electrodes 1, dielectric 2, separating electrodes, a gap 3 formed between the dielectrics 3 that can be reduced to zero, a power supply 4 and an electric key 5, wherein the device is not able to function as an electrostatic lock autonomously;

Fig. 2 shows an electrostatic lock (ESL), comprising all the above elements of the device of Fig. 1, further comprising electric valves (rectifiers) 6, allowing for the technical effect required when locking the ESL, and comprising a branch resistance 7;

Fig. 3 shows an electrostatic lock (ESL), unlike the ESL of Fig. 2 having both the primary electrodes 1, directly chargeable from the electrical power supply, and a secondary electrode 12 wherein secondary charges are induced with the charges of the primary electrodes.

Fig. 4 shows an electrostatic lock (ESL), which unlike the ESL shown in Fig. 2 comprises a capacitor 8 extending the term of the ESL being in the locked state, a variable capacitance switched capacitor 9, as well as a recharge circuit for recharging one of the electrodes with an opposite polarity charge when unlocking the ESL in order to accelerate unlocking, further comprising an electric valve (rectifier) 10 and an inductance coil 11;

Fig. 5 illustrates a repulsion effect caused by a magnetic Ampere force arising between electrodes, charged with the opposite polarity charges and symmetrically connected to an power supply (the respective polarity charge currents are marked with the reference character i, with arrows showing their direction; the references correspond to the figures as above);

Fig. 6 illustrates an attraction effect caused by a magnetic Ampere force arising between electrodes, charged with the opposite polarity charges and antisymmetrically connected to an power supply (the respective polarity charge currents are marked with the reference character i, with arrows showing their direction; the references correspond to the figures as above).

## Claims

1. Electrostatic lock (ESL) - a device for releasable fixing and holding individual parts or elements of various mechanisms and devices in a fixed state relative to each other, by means of electrostatic (Coulomb) attraction force, comprising fixable electrodes, mechanically and kinematically connected with parts or elements to be mutually fixed and connectable to an electrical power supply for imparting to the electrodes opposite charges and comprising at least one dielectric layer separating the electrodes to be oppositely charged, so as while fixing (locking) the ESL oppositely charged electrodes tightly adjoin each other through the dielectric they are separated with, **characterized in that**, at least two electric valves (rectifiers) are used for connecting the ESL electrodes to the electrical power supply each valve (rectifier) being connected directly to its electrode or group of electrodes in order to provide charging thereof with electric charge of a certain polarity (opposite to the one of another electrode or group of electrodes) and to eliminate or minimize any possible current occurrence in the direction opposite to the electrodes' current when being charged.

2. Electrostatic lock (ESL) of claim 1, **characterized in that** besides the electrodes, chargeable directly from the electrical power supply (primary electrodes) it further comprises one or more mutually short-circuited or grounded electrodes (secondary electrodes), separated from the primary electrodes with one or more dielectric layers and tightly adjoined thereto at a fixed (locked) state of the ESL, so when the electric charges are accumulated on the primary electrodes, secondary charges induced (stimulated) by electric fields of the primary charges, accumulated on the primary electrodes are accumulated on the secondary electrodes on their contact surface with the primary ones (through the dielectric); wherein the induced secondary charges are of opposite polarity with respect to the primary charges inducing them thus creating an electrostatic attraction force between the primary and secondary electrodes.

**3.** Electrostatic lock (ESL) according to any one of claims 1-2, **characterized in that** at least one of the electrodes is included into the turning pair thus enabling the electrode to make small turns relative to an axis or a point of fixing to one of the mechanism parts to be fixed for fine adjustment and tight adjoining to another electrode when fixing (locking) the ESL.

**4.** Electrostatic lock (ESL) according to any one of claims 1-2, **characterized in** comprising additional energy storage capacitor included into the electric circuit in parallel with the fixable electrodes, wherein the electric valves (rectifiers) are introduced into the ESL circuit between the points, where the additional capacitor and the electrodes are introduced, in order to eliminate or minimize the reverse charge current from the electrodes to the additional capacitor.

**5.** Electrostatic lock (ESL) according to any one of claims 1-2, **characterized in** comprising an additional switched capacitor of variable capacitance included into the electric circuit in parallel with the fixable electrodes for regulating the attraction force wherein said switched capacitor can be used for locking and unlocking the ESL.

**6.** Electrostatic lock (ESL) according to any one of claims 1-2, **characterized in that** the electrodes have two different groups of contacts for introducing them into the ESL electric circuit: a group of symmetric contacts, each placed on corresponding electrode symmetrically to the contact placed on the facing oppositely charged electrode it is attracted to, so that along with the electrodes discharge upon unlocking the ESL an additional Ampere force repulsing the facing electrodes (a force of interaction between the facing electrodes when being discharged) arises thus enhancing and accelerating the ESL unlocking; and a group of antisymmetric contacts each one placed on its electrode antisymmetrically to the contact placed on the facing oppositely charged electrode it is attracted to, so that along with the electrodes charge upon locking the ESL an additional Ampere force of attracting the facing electrodes (a force of interaction between the facing electrodes when being charged) arises thus enhancing and accelerating the ESL locking; wherein while locking the ESL the electrodes are introduced into the circuit through the antisymmetric contacts only (the symmetric ones being disconnected), and while unlocking the ESL the electrodes are connected through the symmetric contacts only (the antisymmetric ones being disconnected).

**7.** Electrostatic lock (ESL) according to any one of claims 1-2, **characterized in** further comprising an electromagnetic lock creating an additional electromagnetic attraction force between the electrodes and comprising of an electromagnet integrated with one of the electrodes and an armature integrated with another one.

**8.** Electrostatic lock (ESL) according to any one of claims 1-2, **characterized in** comprising at least one switch (electric key) to be turned into open position for separating (unlocking) the ESL electrodes thus providing complete discharge for both electrodes through closing the electrodes with each other or with a ground loop; after unlocking the ESL the switch is returned to initial closed position.

**9.** Electrostatic lock (ESL) according to any one of claims 1-2, **characterized in** comprising at least one switch (electric key) to be turned into the open position for separating (unlocking) the ESL electrodes thus providing excluding of one of the electrodes from its main circuit and connecting it to the opposite polarity electrical charge source (to the corresponding pole of the electrical power supply) for imparting to said electrode charges of the opposite electrode polarity thus creating a electrostatic repulsive force between the electrodes; upon locking the ESL said switch is returned into the initial locked state.

**10.** Electrostatic lock (ESL) of claim 9, **characterized in that** in order to enhance the electrode repulsion effect when unlocking the ESL, the lock comprises an inductance coil introduced in series into the circuit between the opposite charge source and a rechargeable electrode.

**11.** Electrostatic lock (ESL) of claim 9, **characterized in that** in order to enhance the electrode repulsion effect when unlocking the ESL, the lock comprises an electric valve (rectifier) introduced in series into the circuit between the opposite charge source and a rechargeable electrode in order to minimize the reverse current.

**12.** Electrostatic lock (ESL) according to any one of claims 1-2, **characterized in that** electrolytic valves (rectifiers) with valve effect on the metal and electrolyte interface are used as electric valves (rectifiers).

**13.** Electrostatic lock (ESL) according to any one of claims 1-2, **characterized in that** ionic valves (rectifiers) with valve effect at the metal and gas interface are used as electric valves (rectifiers).

**14.** Electrostatic lock (ESL) according to any one of claims 1-2, **characterized in that** electric vacuum valves (rectifiers) with valve effect on the metal and vacuum interface are used as electric valves (rectifiers).

15. Electrostatic lock (ESL) according to any one of claims 1-2, **characterized in that** semiconductor valves (rectifiers) are used as electric valves (rectifiers).

16. Electrostatic lock (ESL) of claim 15, **characterized in that** semiconductor diodes are used as electric semiconductor valves (rectifiers).

17. Electrostatic lock (ESL) of claim 15, **characterized in that** thyristors are used as electric semiconductor valves (rectifiers).

18. Electrostatic lock (ESL) according to any one of claims 1-2, **characterized in** comprising an autonomous electric power source: a photovoltaic generator (solar battery).

19. Electrostatic lock (ESL) according to any one of claims 1-2, **characterized in** comprising an autonomous electric power source: a thermoelectric generator.

20. Electrostatic lock (ESL) according to any one of claims 1-2, **characterized in** comprising an autonomous electric power source: a chemical current source - a galvanic cell.

21. Electrostatic lock (ESL) according to any one of claims 1-2, **characterized in** comprising an autonomous electric power source: a chemical current source - a storage battery.

22. Electrostatic lock (ESL) according to any one of claims 1-2, **characterized in** comprising an autonomous electric power source: an electromechanical generator - a converter meant for converting the mechanical motion energy generated when an electrode or a group of electrodes comes close to another electrode or group of electrodes upon the ESL fixing (locking), into the electrical energy.

23. Electrostatic lock (ESL) of claim 22, **characterized in** comprising a piezoelectric generator used as an autonomous electric power source (an electromechanical generator).

24. Electrostatic lock (ESL) of claim 22, **characterized in** comprising a capacitance electric generator used as an autonomous electric power source (an electromechanical generator).

Fig. 1

Fig. 2

Fig. 3

Fig. 4

Fig. 5

Fig. 6

## INTERNATIONAL SEARCH REPORT

| | International application No. |
|---|---|
| | PCT/RU 2013/001086 |

### A. CLASSIFICATION OF SUBJECT MATTER
E05B 47/00 (2006.01)

According to International Patent Classification (IPC) or to both national classification and IPC

### B. FIELDS SEARCHED

Minimum documentation searched (classification system followed by classification symbols)
E05B 47/00

Documentation searched other than minimum documentation to the extent that such documents are included in the fields searched

Electronic data base consulted during the international search (name of data base and, where practicable, search terms used)
PatSearch (RUPTO internal), Espacenet

### C. DOCUMENTS CONSIDERED TO BE RELEVANT

| Category* | Citation of document, with indication, where appropriate, of the relevant passages | Relevant to claim No. |
|---|---|---|
| D, A | RU 2158438 C1 (NUNUPAROV MARTYN SERGEEVICH) 27.10.2000 | 1-24 |
| A | RU 2399736 C1 (NUNUPAROV MARTYN SERGEEVICH) 20.09.2010 | 1-24 |
| A | DE 3713653 A1 (ZEISS IKON AG) 17.11.1988 | 1-24 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 07 April 2014 (07.04.2014) | 17 April 2014 (17.04.2014) |

| Name and mailing address of the ISA/<br>RU | Authorized officer |
|---|---|
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2158438 C1